# EUROPÄISCHE PATENTSCHRIFT

(11) **EP 0 984 144 B1**
(45) Veröffentlichungstag und Bekanntmachung des Hinweises auf die Patenterteilung: **14.04.2004**
(21) Anmeldenummer: 99114984.0
(22) Anmeldetag: 31.07.1999
(51) Int. Cl.: F02B 27/04

(54) **Abgasanlage einer mehrzylindrigen Brennkraftmaschine**
Exhaust system of a multi-cylinder internal combustion engine
Système d'échappement d'un moteur à combustion interne à plusieurs cylindres

(30) Priorität: 03.09.1998 DE 19840096
(43) Veröffentlichungstag der Anmeldung: 08.03.2000
(73) Patentinhaber: Dr.Ing. h.c.F. Porsche Aktiengesellschaft, 70435 Stuttgart (DE)
(72) Erfinder: Rutschmann, Erwin, 75233 Tiefenbronn (DE)

(56) Entgegenhaltungen:
- US-A- 4 926 635
- US-A- 5 134 850
- US-A- 5 265 420
- US-A- 5 582 004

## Beschreibung

Die Erfindung betrifft eine Abgasanlage einer mehrzylindrigen Brennkraftmaschine nach der Gattung des Hauptanspruches.

Eine derartige Abgasanlage ist beispielsweise aus der US-PS 5,134,850 bekannt. In den für jeweils zwei Zylinder eines 4 - Zylindermotors vorgesehenen Abgasabführungen sind jeweils ein Katalysator angeordnet, wobei die beiden Abgasabführungen u. a. stromaufwärts über eine mit einem Schaltventil kontrollierbare Leitung verbunden sind. Stromabwärts der beiden Katalysatoren sind die beiden Abgasstränge wieder zusammen geführt. Ist das Schaltventil geöffnet, findet eine Reflexion der Abgaspulsationen auf der Höhe der Verbindungsleitung statt, während bei geschlossener Verbindungsleitung die Reflexion der Abgaspulsationen bei der Zusammenführung der beiden Abgasstränge hinter den beiden Katalysatoren stattfindet. Damit kann in Abhängigkeit von den Ventilöffnungszeiten und der Motordrehzahl das Zylinder - Füllungsverhaltens und damit das Drehmoment des Motors verbessert werden.

Der Erfindung liegt demgegenüber die Aufgabe zugrunde, eine Anordnung für eine zweiflutige Abgasanlage zu entwickeln, bei der analog zu Resonanz- und Schwingrohrsystemen auf der Einlassseite einer Brennkraftmaschine bei entsprechender geometrischer Abstimmung der dynamische Aufladeeffekt verbessert wird, um eine weitere Steigerung des Motordrehmoments zu erzielen.

Diese Aufgabe wird erfindungsgemäß mit den Merkmalen des Hauptanspruches gelöst. Dadurch, dass die mit einem Sperrelement versehene Verbindungsleitung zwischen den beiden Abgassträngen - in Strömungsrichtung der Abgase gesehen- hinter den beiden Katalysatoren vorgesehen ist, kann zwischen den beiden Zylinderreihen auf der Auslassseite ein Zweimassen- Schwingsystem erzeugt werden, bei dem die Katalysatoren als Resonanzkörper zur Verfügung stehen. Durch die Tatsache, dass die Verbindungsleitung stirnseitig in die Katalysatorelemente einmündet, ist sichergestellt, dass Überströmverluste in Strömungsrichtung der Abgase minimiert sind.

In der DE 37 40 238 A1 ist eine Brennkraftmaschine mit zwei Gruppen von Zylindern dargestellt und beschrieben ist, die jeweils einen Abgasstrang mit einem Katalysatorelement aufweisen. Die beiden Abgasstränge sind über jeweils eine Verbindungsleitung miteinander gekoppelt, durch die eine Vergleichmäßigung der Katalysatorbeaufschlagung erzielt werden soll. Bei einer derartigen Abgasanlage kann es in Abhängigkeit von Zündfolge und Drehzahl zu ungünstigen Druckverläufen bzw. Druckanstiegen beim Zusammenwirken der einzelnen Ausstoßtakte der Zylinder kommen.

Durch die in den Unteransprüchen aufgeführten Merkmale sind weitere vorteilhafte Ausgestaltungen und Weiterbildungen der Erfindung möglich.

Die Verbindungsleitung zwischen den beiden Abgassträngen ist in vorteilhafter Weise so angeordnet, dass die Abgasströmung im Bereich der Verbindungsstellen im wesentlichen geradlinig verläuft, so dass eine weitgehend ungestaute bzw. ungedrosselte Durchströmung erfolgt und somit eine entsprechend gute Resonanzwirkung erzielt werden kann.

Wird die Verbindungsleitung zwischen den beiden Abgassträngen jeweils mit dem Ausströmtrichter der Katalysatorelemente verbunden, werden diese in vorteilhafter Weise einander zugewandt angeordnet, so dass ihre Achsen fluchten oder zumindest parallel verlaufen. Damit ist eine weitgehend geradlinige Anordnung der Verbindungsleitung möglich und eine Strömungsumlenkung im Übergangsbereich zwischen Verbindungsleitung und Abgasrohr wird vermieden.

Ein besonders guter Drehmomentverlauf einer mit einer derartigen Abgasanlage versehenen mehrzylindrigen Brennkraftmaschine ergibt sich, wenn die Sperrklappe in der Verbindungsleitung in Abhängigkeit von der Drehzahl der Brennkraftmaschine angesteuert wird und die Sperrklappe unterhalb einer Grenzdrehzahl n_{G} die Verbindungsleitung sperrt und oberhalb der Grenzdrehzahl n_{G} öffnet.

Eine besonders gute Resonanzwirkung über die Verbindungsleitung wird erzielt, wenn der Durchmesser der Verbindungsleitung im wesentlichen dem Durchmesser der verbundenen Abgasrohre entspricht.

Weitere Vorteile und vorteilhafte Weiterbildungen der Erfindung ergeben sich aus den Unteransprüchen und der Beschreibung.

Ein Ausführungsbeispiel der Erfindung ist in der nachfolgenden Beschreibung und Zeichnung näher erläutert. Letztere zeigt in
- Fig. 1: eine schematische Darstellung einer Brennkraftmaschine mit einer erfindungsgemäßen Abgasanlage und in
- Fig. 2: ein Drehzahl-Drehmoment-Diagramm einer Brennkraftmaschine mit einer erfindungsgemäßen Abgasanlage.

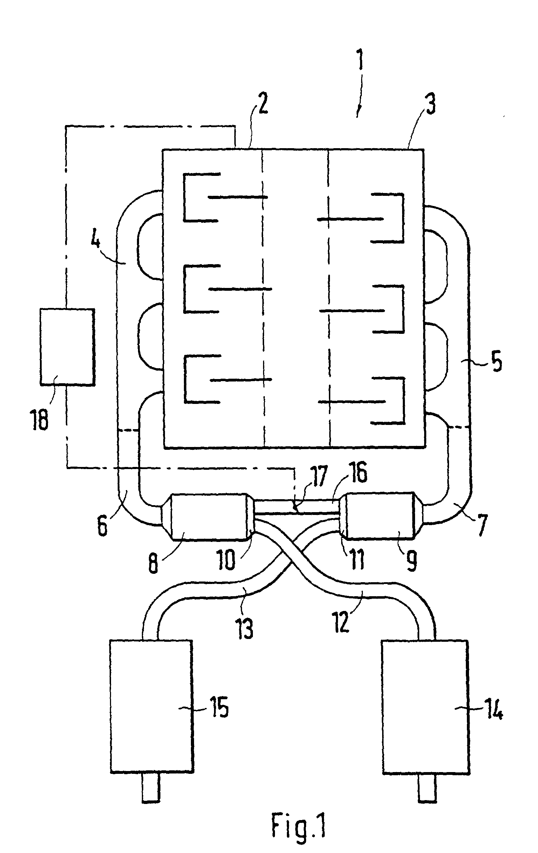

Die in Fig. 1 schematisch dargestellte Brennkraftmaschine ist in diesem Ausführungsbeispiel - ohne Beschränkung auf diese Ausführungsform - als Sechs-Zylinder-Boxermotor ausgebildet. Eine Ausführung mit Reihen- oder V-Anordnung der Zylinder ist ebenfalls ohne weiteres möglich. Die beiden Zylinderbänke 2, 3 der Brennkraftmaschine 1 sind gruppenweise zusammengefaßt. Jede der beiden Zylinderbänke 2, 3 ist auf der Auslaßseite mit einem Abgaskrümmer 4, 5 versehen. Jeder der beiden Abgaskrümmer 4, 5 ist über ein Abgasrohr 6, 7 mit einem Katalysatorelement 8, 9 verbunden. Die Katalysatorelemente sind so angeordnet, daß ihre Längsachsen im wesentlichen fluchtend zueinander verlaufen und ihre Ausgangsseiten einander zugewandt sind. Vom Ausströmtrichter 10, 11 jedes der beiden Katalysatorelemente 8, 9 geht eine Rohrleitung 12, 13 aus, die zu einem Schalldämpfer 14, 15 führt.

Zwischen den Ausströmtrichtern 10, 11 der beiden Katalysatorelemente 8, 9 ist eine Verbindungsleitung 16 angeordnet, die eine Sperrklappe 17 enthält. Durch diese Sperrklappe 17 ist die Verbindungsleitung 16 in Abhängigkeit von der Schaltstellung abgesperrt bzw. geöffnet. Die Sperrklappe 17 wird über eine nicht näher dargestellte Stelleinrichtung betätigt, die mit dem Motorsteuergerät 18 verbunden ist. Dadurch kann die Sperrklappe 17 in Abhängigkeit von definierten Betriebsparametern der Brennkraftmaschine angesteuert werden.

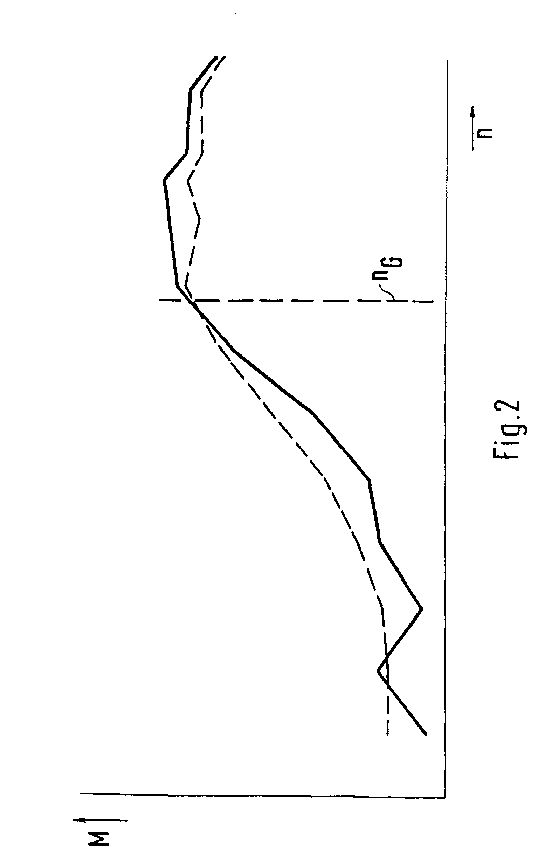

In Fig. 2 ist eine sogenannte Vollastkurve einer Brennkraftmaschine mit einer erfindungsgemäßen Abgasanlage exemplarisch dargestellt. Dabei zeigt die durchgezogene Kurve den Drehzahl-Drehmoment-Verlauf bei geöffneter Sperrklappe 17 und die gestrichelt dargestellte Linie den entsprechenden Verlauf bei geschlossener Sperrklappe 17. Die beiden Kurven schneiden sich im Bereich einer Grenzdrehzahl n_{G}. Unterhalb dieser Grenzdrehzahl n_{G} (n < n_{G}) ist das erreichbare Drehmoment bei einer definierten Drehzahl höher, sofern die Sperrklappe 17 geschlossen ist. Oberhalb dieser Grenzdrehzahl n_{G} (n > n_{G}) ist das drehzahlabhängig erreichbare Drehmoment größer, sofern die Sperrklappe 17 geöffnet wird. Ein optimaler Drehzahl-Drehmoment-Verlauf wird demzufolge erreicht, wenn die Absperrklappe unterhalb der Grenzdrehzahl n_{G} geschlossen und oberhalb dieser Grenzdrehzahl n_{G} geöffnet wird.

## Patentansprüche

1. Abgasanlage einer mehrzylindrigen Brennkraftmaschine mit zwei Gruppen (2, 3) von Zylindern mit jeweils einem Abgasstrang (4, 6, 12; 5, 7, 13) in dem jeweils mindestens ein Katalysatorelement (8, 9) angeordnet ist, und mit mindestens einer Verbindungsleitung (16) zwischen den Abgassträngen, wobei die Verbindungsleitung (16) motornah angeordnet und als Resonanzrohr ausgebildet ist, und dass die Verbindungsleitung (16) mit einem Sperrelement (17) versehen ist, durch dass die Resonanzverbindung in Abhängigkeit von mindestens einem Betriebsparameter der Brennkraftmaschine sperrbar bzw. entsperrbar ist, **dadurch gekennzeichnet, dass** die Katalysatorelemente (8, 9) in Strömungsrichtung der Abgase vor der Verbindungsleitung (16) angeordnet sind und dass die Verbindungsleitung (16) von den Ausströmtrichtern (10, 11) der Katalysatorelemente (8, 9) ausgeht bzw. in diese mündet.

2. Abgasanlage einer mehrzylindrigen Brennkraftmaschine nach Anspruch 1, **dadurch gekennzeichnet, dass** die Ausströmtrichter (10, 11) der Katalysatorelemente (8, 9) einander zugewandt sind, und dass die Verbindungsleitung (16) im wesentlichen geradlinig verläuft.

3. Abgasanlage einer mehrzylindrigen Brennkraftmaschine nach Anspruch 1 oder 2, **dadurch gekennzeichnet, dass** das Sperrelement (17) in Abhängigkeit von der Drehzahl der Brennkraftmaschine angesteuert wird, und dass das Sperrelement die Verbindungsleitung (16) unterhalb einer Grenzdrehzahl (n_{G}) absperrt und oberhalb der Grenzdrehzahl (n_{G}) öffnet.

4. Abgasanlage einer mehrzylindrigen Brennkraftmaschine nach einem der vorangehenden Ansprüche, **dadurch gekennzeichnet, dass** der Durchmesser der Verbindungsleitung (16) im wesentlichen dem Durchmesser der verbundenen Abgasrohre (6, 7) entspricht.

## Claims

1. An exhaust system of a multiple-cylinder internal-combustion engine with two groups (2, 3) of cylinders with one respective exhaust-gas line (4, 6, 12; 5, 7, 13) in each case, in which at least one catalyst element (8, 9) is arranged in each case, and with at least one connecting line (16) between the exhaust-gas lines, wherein the connecting line (16) is arranged close to the engine and is designed in the form of a resonance tube, and the connecting line (16) is provided with a shut-off element (17) by which the resonance connexion is capable of being shut off or opened in a manner dependent upon at least one operating parameter of the internal-combustion engine, **characterized in that** the catalyst elements (8, 9) are arranged upstream of the connecting line (16) in the flow direction of the exhaust gases, and the connecting line (16) starts from and opens into the outflow funnels (10, 11) of the catalyst elements (8, 9).

2. An exhaust system of a multiple-cylinder internal-combustion engine according to Claim 1, **characterized in that** the outflow funnels (10, 11) of the catalyst elements (8, 9) are facing each other, and the connecting line (16) extends substantially in a straight line.

3. An exhaust system of a multiple-cylinder internal-combustion engine according to Claim 1 or 2, **characterized in that** the shut-off element (17) is actuated in a manner dependent upon the rotational speed of the internal-combustion engine, and the shut-off element shuts off the connecting line (16) below a limit speed (**n**_{G}) and opens it above the limit speed (**n**_{G}).

4. An exhaust system of a multiple-cylinder internal-combustion engine according to one of the preceding Claims, **characterized in that** the diameter of the connecting line (16) essentially corresponds to the diameter of the connected exhaust-gas lines (6, 7).

## Revendications

1. Système d'échappement des gaz d'un moteur à combustion interne à plusieurs cylindres comportant deux groupes (2, 3) de cylindres avec chacun une ligne d'échappement (4, 6, 12 ; 5, 7, 13) dans chacune desquelles est disposé au moins un élément catalyseur (8, 9), et comportant au moins une conduite de liaison (16) entre les lignes d'échappement, la conduite de liaison (16) étant disposée près du moteur et réalisée en tant que tube de résonance, et la conduite de liaison (16) étant pourvue d'un élément de fermeture (17) par lequel la liaison de résonance peut être fermée ou ouverte en fonction d'au moins un paramètre de fonctionnement du moteur à combustion interne, **caractérisé en ce que** les éléments catalyseurs (8, 9) sont disposés dans le sens d'écoulement des gaz d'échappement en amont de la conduite de liaison (16), et **en ce que** la conduite de liaison (16) part des cônes de sortie (10, 11) des éléments catalyseurs (8, 9) ou débouche dans ceux-ci.

2. Système d'échappement des gaz d'un moteur à combustion interne à plusieurs cylindres selon la revendication 1, **caractérisé en ce que** les cônes d'évacuation (10, 11) des éléments catalyseurs (8, 9) sont tournés l'un vers l'autre, et **en ce que** la conduite de liaison (16) s'étend sensiblement en ligne droite.

3. Système d'échappement des gaz d'un moteur à combustion interne à plusieurs cylindres selon la revendication 1 ou 2, **caractérisé en ce que** l'élément de fermeture (17) est commandé en fonction la vitesse de rotation du moteur à combustion interne, et **en ce que** l'élément de fermeture ferme la conduite de liaison (16) au-dessous d'une vitesse de rotation limite (n_{G}) et l'ouvre au-dessus de la vitesse de rotation limite (n_{G}).

4. Système d'échappement des gaz d'un moteur à combustion interne à plusieurs cylindres selon l'une des revendications précédentes, **caractérisé en ce que** le diamètre de la conduite de liaison (16) correspond sensiblement au diamètre des tuyaux d'échappement (6, 7) reliés.
